# EUROPEAN PATENT SPECIFICATION

(11) **EP 2 874 373 B1**
(45) Date of publication and mention of the grant of the patent: **06.03.2019**
(21) Application number: 13816836.4
(22) Date of filing: 11.07.2013
(51) Int. Cl.: H04L 29/08, G06F 9/445, H04L 12/26, G06F 9/50, G06F 9/455

(54) **METHOD, DEVICE AND SYSTEM FOR MIGRATION OF VIRTUAL MACHINES**
VERFAHREN, VORRICHTUNG UND SYSTEM ZUR MIGRATION VIRTUELLER MASCHINEN
PROCÉDÉ, DISPOSITIF ET SYSTÈME POUR EXÉCUTER UNE MIGRATION DE MACHINES VIRTUELLES

(30) Priority: 13.07.2012 CN 201210243326
(43) Date of publication of application: 20.05.2015
(73) Proprietor: ZTE Corporation, Shenzhen City Guangdong Province 518057 (CN)
(72) Inventor: SHI, Jiangtao, Shenzhen Guangdong Province 518057 (CN)
(74) Representative: Novagraaf Technologies
(86) International application number: PCT/CN2013/079223
(87) International publication number: WO 2014/008867

(56) References cited:
- WO-A1-2014/008867
- CN-A- 102 404 412
- CN-A- 102 455 942
- CN-A- 102 549 973
- CN-A- 102 769 670
- US-A1- 2009 063 750
- US-A1- 2010 027 420
- US-A1- 2012 005 344
- US-A1- 2012 089 981

## Description

### Technical Field

The embodiments of the present invention relate to the communication field, and in particular to a method, an apparatus and a system for migrating virtual machines.

### Background

Energy saving is one of the core requirements of data centre devices, and research shows previously about 50% of network device investment is used to tackle the issue of energy consumption, therefore, the goal of the new-generation data centre is to get a new breakthrough in energy saving. A technology for dynamic migration of virtual machines applied in a data centre mainly is to realize the robustness of usage of virtual machine (VM) services, but in terms of considering energy consumption, the policy of virtual machine migration also may bring some benefits to the energy saving in the data centre.

An energy saving technology (e.g., Energy-Efficient Ethernet, which is called EEE for short) proposed by the Institute of Electrical and Electronics Engineers (IEEE) can be applied in a data centre network device (for example, switch). This technology can make a network device enter an energy saving state to reduce the energy consumption when the port of this network device has no traffic and make the network device exit the energy saving state once the port has traffic, without impacting service forwarding.

At present, relevant technologies mostly manage the migration of virtual machines in the virtual machine management server side. For example, a migration strategy may be used in consideration of time; for instance, since there are fewer users at night, virtual machines can be migrated to some servers together, or, in view of server resource utilization, the virtual machines with low server resource utilization can be removed from the server to achieve the purpose of energy saving. However, since the virtual machine management server can not learn the actual usage condition of the virtual machines, an improper migration might be caused, which consequently leads to packet loss and decline of the user experience.

In view of the problem that packet loss might be caused by virtual machine migration methods in relevant technologies, no solution has been put forward.

Document CN 102549973 A discloses a method and system for power saving. The method includes migrating virtual machines. Document US 2012/089981 A1 discloses a method and system for power management in a virtual machine environment without disrupting network connectivity. The method includes migrating virtual machines. Document US 2010/027420 A1 discloses dynamic distribution of virtual machines in a communication network. Document US 2012/005344A1 discloses a system for managing physical and virtual inventory in a data center However, the above mentioned problem still remains unsolved by the above mentioned documents.

### Summary

The invention is related to a method according to claim 1, an apparatus according to claim 5 and a system according to claim 7. Further embodiments of the invention are defined by the dependent claims.

### Brief Description of the Drawings

For a better understanding of the present invention, accompanying drawings described hereinafter are provided to constitute one part of the application; the schematic embodiments of the present invention and the description thereof are used to illustrate the present invention but to limit the present invention improperly. In the accompanying drawings:
Fig. 1 shows a flowchart of a method for migrating virtual machines according to an embodiment of the present invention;
Fig. 2 shows a structure diagram of an apparatus for migrating virtual machines according to an embodiment of the present invention;
Fig. 3 shows an example structure diagram of a detection component according to an embodiment of the present invention;
Fig. 4 shows an example structure diagram of a first judgment component according to an embodiment of the present invention;
Fig. 5 shows an example structure diagram of a request component according to an embodiment of the present invention;
Fig. 6 shows a structure diagram of a system for migrating virtual machines according to an embodiment of the present invention;
Fig. 7 shows an example structure diagram of a second detection component according to an embodiment of the present invention;
Fig. 8 shows a flowchart of a method for achieving energy saving for data centre network devices by controlling virtual machine migration according to an example embodiment of the present invention.

### Detailed Description of the Embodiments

The embodiment of the present invention is described below in detail by reference to the accompanying drawings in conjunction with embodiments. It should be noted that the embodiments in the application and the characteristics of the embodiments can be combined if no conflict is caused.

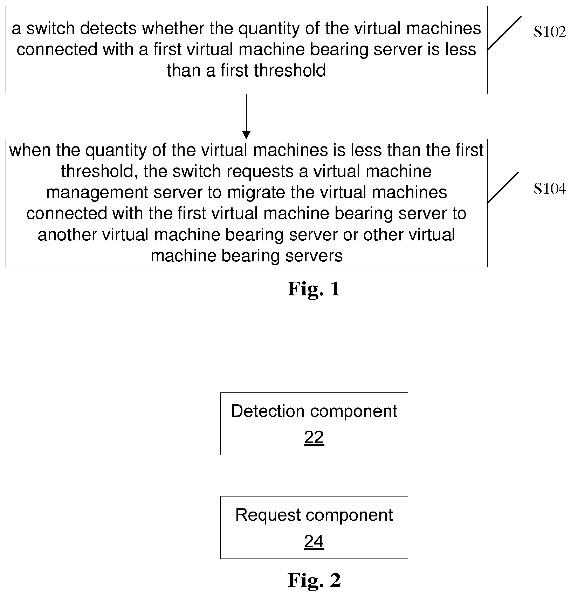

An embodiment provides a method for migrating virtual machines. Fig. 1 shows a flowchart of the method for migrating virtual machines according to the embodiment of the present invention. As shown in Fig. 1, the method includes following steps:
S102: a switch detects whether a quantity of the virtual machines connected with a first virtual machine bearing server is less than a first threshold.
S104: when the quantity of the virtual machines is less than the first threshold, the switch requests a virtual machine management server to migrate the virtual machines connected with the first virtual machine bearing server to another virtual machine bearing server or other virtual machine bearing servers.

Through the above steps in this embodiment, the switch detects whether the quantity of the virtual machines connected with the first virtual machine bearing server is less than the first threshold; when the quantity of the virtual machines is less than the first threshold, the switch requests the virtual machine management server to migrate the virtual machines connected with the first virtual machine bearing server to another virtual machine bearing server or other virtual machine bearing servers. Thus, the actual usage condition of the virtual machines in the first virtual machine bearing server can be learned, and the virtual machine management server may be requested to perform migration of virtual machines according to the actual usage condition. By virtue of this solution, the problem that packet loss is possibly caused by virtual machine migration methods in relevant technologies is solved, and the smooth progress of services is guaranteed while the energy consumption of data centre network devices is reduced.

It should be noted that vocabulary such as "first", "second" and "third" referred in this paper is used for convenient description only, not to describe order or limit other specific relationships.

As an example embodiment, the switch may learn the quantity of the virtual machines connected with the first virtual machine bearing server through the port traffic between the switch and the first virtual machine bearing server. For example, the switch may judge whether the port traffic between the first virtual machine bearing server and the switch is less than a second threshold within a preset duration; when the port traffic between the first virtual machine bearing server and the switch is less than the second threshold within the preset duration, the switch determines that the quantity of the virtual machines connected with the first virtual machine bearing server is less than the first threshold.

In the described embodiment, during the process of detecting the port traffic, the switch may detect the peak value besides the average value. When the average value is less than the second threshold and the peak value is less than a preset multiple of the second threshold within a preset duration, the switch also may determine that the quantity of the virtual machines connected with the first virtual machine bearing server is less than the first threshold. For example, supposing the second threshold is 500M and the preset duration is 10 min, when the switch detects that the average value of the port traffic is lower than 500M within 10 minutes and the peak value is lower than the triple (1500M) of the second threshold within 10 minutes, the switch may determine that the quantity of the virtual machines connected with the first virtual machine bearing server is less than the first threshold.

In the described embodiment, the switch may send a message according to a predefined format while communicating with the virtual machine management server, wherein the message may carry the average value and the peak value of the port traffic, the port number corresponding to the first virtual machine bearing server, and the active request identification used for identifying whether the first virtual machine bearing server is a request initiator. For example, when the virtual machine bearing server initiates a virtual machine migration, the active request identification may be set as active request.

In the described embodiment, after receiving the migration request from the switch, the virtual machine management server may judge whether to perform a corresponding virtual machine migration operation according to the resource usage condition of another machine bearing server or other virtual machine bearing servers. For example, the virtual machine management server may send a traffic statistics query to one or more other ports other than the port corresponding to the first virtual machine bearing server and judge whether to migrate the virtual machines to a second virtual machine bearing server corresponding to above-mentioned another port other than the port corresponding to the first virtual machine bearing server, or corresponding to one port of the above-mentioned other ports other than the port corresponding to the first virtual machine bearing server, according to the traffic statistics of the one or more other ports.

In this condition, the switch of another port or the switches of the one or more other ports also may communicate with the virtual machine management server according to the predefined message format, but the difference is that this switch or these switches may set the active request identification as inactive request.

After acquiring the traffic statistics of the one or more other ports, the virtual machine management server may judge hereby whether to perform the corresponding virtual machine migration operation. As an example embodiment, when a sum of an average value of the port traffic of the first virtual machine bearing server and an average value of the port traffic of the second virtual machine bearing server is not greater than a third threshold, and a sum of a peak value of the port traffic of the first virtual machine bearing server and a peak value of the port traffic of the second virtual machine bearing server is not greater than the total bandwidth of the second virtual machine bearing server, the virtual machine management server may migrate the virtual machines to the second virtual machine bearing server corresponding to the above-mentioned one or more other ports. For example, when the sum of the average values after migration is not greater than 80% of the total bandwidth and the sum of the peak values after migration is not greater than the total bandwidth, the virtual machine management server may migrate the virtual machines to the second virtual machine bearing server.

Corresponding to the above method, this embodiment also provides an apparatus for migrating virtual machines, which can be located in a switch side. This apparatus is configured to realize the above embodiments and example embodiments, which have been described above and are not described here. The term "component" used hereinafter can realize the combination of software and/or hardware of preset functions. Although the apparatus described in following embodiments preferably is realized in the form of software, it is possible to realize the apparatus in the form of hardware or the combination of software and hardware.

Fig. 2 shows a structure diagram of an apparatus for migrating virtual machines according to the embodiment of the present invention. As shown in Fig. 2, the apparatus includes: a detection component 22 and a request component 24, both of which are described below in detail.

The detection component 22 is configured to detect whether a quantity of the virtual machines connected with a first virtual machine bearing server is less than a first threshold; the request component 24 is coupled with the detection component 22 and is configured to request a virtual machine management server to migrate the virtual machines connected with the first virtual machine bearing server to another virtual machine or other virtual machine bearing servers, when the quantity of the virtual machines is less than the first threshold.

Through the above components in this embodiment, the detection component 22 detects whether the quantity of the virtual machines connected with the first virtual machine bearing server is less than the first threshold; when the quantity of the virtual machines is less than the first threshold, the request component 24 requests the virtual machine management server to migrate the virtual machines connected with the first virtual machine bearing server to another virtual machine bearing server or other virtual machine bearing servers. Thus, the actual usage condition of the virtual machines in the first virtual machine bearing server can be learned, and the virtual machine management server may be requested to perform migration of virtual machines according to the actual usage condition. By virtue of the solution, the problem that packet loss is possibly caused by virtual machine migration methods in relevant technologies is solved, and the smooth progress of services is guaranteed while the energy consumption of data centre network devices is reduced.

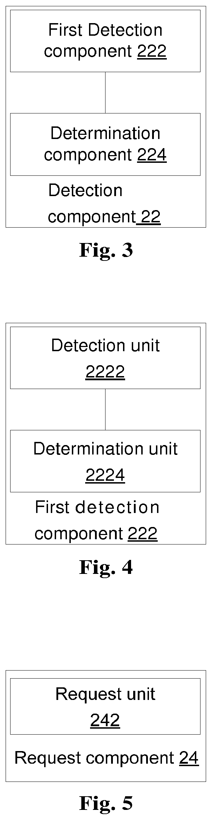

Fig. 3 shows an example structure diagram of the detection component 22 according to the embodiment of the present invention. As shown in Fig. 3, the detection component 22 may include: a first detection component 222, which is configured to judge whether the port traffic between the first virtual machine bearing server and the switch is less than a second threshold within a preset duration; a determination component 224, which is coupled with the first detection component 222 and is configured to determine that the quantity of the virtual machines is less than the first threshold, when the detection result of the first detection component 222 is that the port traffic between the first virtual machine bearing server and the switch is less than the second threshold within the preset duration.

Fig. 4 shows an example structure diagram of the first judgment component 222 according to the embodiment of the present invention. As shown in Fig. 4, the first judgment component 222 may include: a detection unit 2222, which is configured to detect an average value and an peak value of the port traffic; a determination unit 2224, which is coupled with the detection unit 2222 and is configured to determine that the detection result is that the port traffic between the first virtual machine bearing server and the switch is less than the second threshold within the preset duration, when the average value is less than the second threshold and the peak value is less than a preset multiple of the second threshold within the preset duration.

Fig. 5 shows an example structure diagram of the request component 24 according to the embodiment of the present invention. As shown in Fig. 5, the request component 24 may include: a request unit 242, which is configured to request the virtual machine management server to migrate the virtual machines to another virtual machine bearing server or other virtual machine bearing servers through a message in a predefined format, wherein the message in a predefined format carries the average value and the peak value of the port traffic, a port number corresponding to the first virtual machine bearing server, and the active request identification used for identifying whether the first virtual machine bearing server is a request initiator.

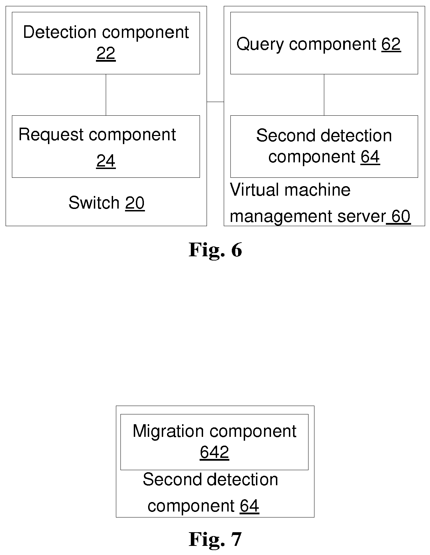

An embodiment also provides a system for migrating virtual machines. Fig. 6 shows a structure diagram of a system for migrating virtual machines according to the embodiment of the present invention. As shown in Fig. 6, the system includes a switch 20 and a virtual machine management server 60, wherein the switch 20 includes the apparatus for migrating virtual machines described in any one of Fig. 2 to Fig. 5 (Fig. 6 is described by taking Fig. 2 as an example), the virtual machine management server 60 includes: a query component 62, which is configured to send a traffic statistics query to one or more other ports other than the port corresponding to the first virtual machine bearing server; a second detection component 64, which is coupled with the query component 62 and is configured to judge whether to migrate the virtual machines to a second virtual machine bearing server corresponding to one port of the one or more other ports, according to the traffic statistics of the one or more other ports.

Fig. 7 shows an example structure diagram of the second detection component 64 according to the embodiment of the present invention. As shown in Fig. 7, the second detection component 64 may include: a migration component 642, which is configured to migrate the virtual machines to the second virtual machine bearing server corresponding to one port of the one or more other ports, when a sum of the average value of the port traffic of the first virtual machine bearing server and the average value of the port traffic of the second virtual machine bearing server is not greater than a third threshold, and a sum of the peak value of the port traffic of the first virtual machine bearing server and the peak value of the port traffic of the second virtual machine bearing server is not greater than the total bandwidth of the second virtual machine bearing server.

The present invention is described below in conjunction with example embodiments. The following example embodiments may combine the above embodiments and the above example embodiments.

This example embodiment provides a method for achieving energy saving for data centre network devices by controlling virtual machine migration. This method migrates virtual machines by monitoring port traffic and sets the port to enter an energy-saving state, thereby achieving the purpose of energy saving of network devices, that is to say, this method sets the migration policy of virtual machines in view of port traffic utilization and combines EEE technology to reduce the energy consumption of network devices.

Data centre network device (such as switch) has an energy saving technology of EEE, which can make a network device enter an energy saving state to reduce the energy consumption by monitoring port traffic and make the network device exit the energy saving state once the port has traffic, without impacting service forwarding. A virtual machine (VM) migration technology in data centre mainly is to protect virtual machines, so that the virtual machines can be migrated to another server or other servers immediately once a server bearing the virtual machines is down, without impacting the services on the virtual machines. At present, the virtual machine migration strategy generally is made according to time and server resources, thereby saving server energy.

This example embodiment is designed from the aspect of network device side, and saves energy for a network device by employing the above two technologies. Even when a server connected with a port of a network device is used by few virtual machines, the corresponding port of the network device always needs to be in a working state and thus wastes energy. For example, when the network device monitors that the port connected with the server has relatively low traffic, for example, a 10Gbps port has less than 500Mbps traffic, the network device can send an application to the virtual machine management server to migrate out the virtual machines connected with this port. At this time when the virtual machine management server determines that the virtual machines can be migrated and there are resources on one or more other servers to bear the virtual machines to be migrated, the virtual machine management server migrates out the virtual machines. Since the virtual machines are migrated out and the port traffic of the network device is now 0, EEE technology will be automatically started, so that the port enters an energy saving state, and the power consumption of the entire device is reduced.

In this example embodiment, a port traffic threshold and a monitoring duration may be set first, for example, a 10Gbps port has a monitoring value of 500bps and the duration is 10 min. The network device starts a timer, for example, to monitor port traffic with a period of 5 seconds. When a port is found to have the traffic lower than 500Mbps within 10 minutes, it is considered that there are fewer virtual machines corresponding to this port, then the network device sends a request to the virtual machine management server to migrate out the virtual machines corresponding to this port; when the request is not allowed, the port is monitored again; when the request is allowed, the virtual machines are migrated out. In this condition, the data traffic of this port would be 0; at this time the IEEE technology started by the port would make the port enter an energy saving state. When the virtual machine management server assigns new virtual machines to this port subsequently, this port would have data traffic again and the EEE technology of the port would make the port exit the energy saving state to forward messages normally.

Of course, from the network device perspective, it is a good method to request migration of virtual machines corresponding to a port by monitoring the traffic of this port; there also are other methods by which to request migration of virtual machines. For example, a switch may directly communicate with a virtual machine management server, and send a request to the virtual machine management server to migrate out the virtual machines corresponding to a port when finding that there are fewer virtual machines on a server connected with this port.

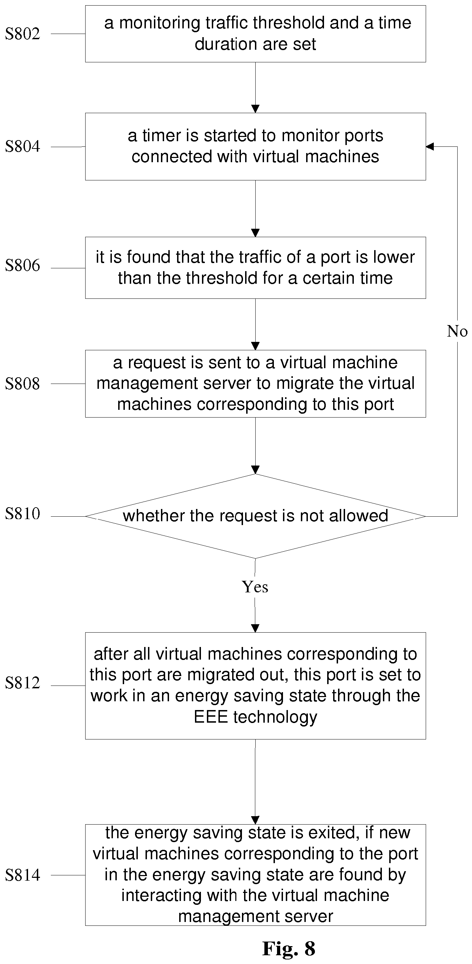

Fig. 8 shows a flowchart of a method for achieving energy saving for data centre network devices by controlling virtual machine migration according to an example embodiment of the present invention. As shown in Fig. 8, the process includes following steps:
S802: a monitoring traffic threshold and a time duration are set.
S804: a timer is started to monitor ports connected with virtual machines.
S806: it is found that the traffic of a port is lower than the threshold for a certain time.
S808: a request is sent to a virtual machine management server to migrate the virtual machines corresponding to this port.
S810: when the request is not allowed, S804 is executed; when the request is allowed, S812 is executed.
S812: after all virtual machines corresponding to this port are migrated out, this port is set to work in an energy saving state through the EEE technology.
S814: the energy saving state is exited, when new virtual machines corresponding to the port in the energy saving state are found by interacting with the virtual machine management server.

In this example embodiment, the algorithm of calculating that the port traffic is lower than the threshold for a certain time in S806, that is, the migration algorithm based on port traffic monitoring, is as follows:
Step 1: the average value and the peak value of the port traffic within a preset time is recorded.
Step 2: when the average value does not exceed the preset port monitoring value, and the peak value is lower than the triple of the port monitoring value, the switch sends a request of the following format to the virtual machine management server to determine whether to set the active request identification as active request. Table 1 shows the message format according to the example embodiment of the present invention. As shown in Table 1, the message format is as follows:

**Table 1**

| | | | |
|---|---|---|---|
| Active request or inactive request | Port Number | Average Value | Peak Value |

In the described embodiment,, the method for detecting whether to allow migration of virtual machines in S810 is as follows:
Step 1: the virtual machine management server sends a traffic statistics query to another switch port or other switch ports.
Step 2: the queried port replies the traffic condition within a preset time using the same format of message; the identification indicating whether to request is set as False, representing not active request.
Step 3: the virtual machine management server judges whether there is a port capable of accepting migration according to the average value and the peak value of the queried port and the resource of the server, wherein the sum of the average values of the migrated port and the target port can not exceed 80% of the total bandwidth and the sum of the peak values can not exceed the total bandwidth.

In another embodiment, software is provided, which is configured to implement the technical scheme described in the above embodiments and example embodiments.

In another embodiment, a storage medium is provided, which stores the software described above, wherein the storage medium includes but not limited to compact disk, floppy disk, hard disk and erasable memory.

Obviously, those skilled in the art should understand that the components or steps described above can be implemented by a common computer device; the components or steps can be integrated on a single computing device or distributed on a network composed of a plurality of computing devices; optionally, the components or steps can be implemented by a programming code executable by a computing device, thus they can be stored in a storage device to be executed by a computing device and executed in a different order in some cases, or manufactured into individual integrated circuit component respectively, or several of them can be manufactured into a single integrated circuit component to implement; in this way, the present invention is not limited to any combination of specific hardware and software.

## Claims

1. A method for migrating virtual machines, comprising:
Detecting (S102), by a switch, whether a quantity of the virtual machines connected with a first virtual machine bearing server is less than a first threshold;
when the quantity of the virtual machines is less than the first threshold, requesting (S104), by the switch, a virtual machine management server to migrate the virtual machines connected with the first virtual machine bearing server to another virtual machine bearing server or other virtual machine bearing servers;
wherein said detecting, by the switch, whether the quantity of the virtual machines connected with the first virtual machine bearing server is less than the first threshold comprises:
detecting, by the switch, whether port traffic between the first virtual machine bearing server and the switch is less than a second threshold within a preset duration;
when the port traffic between the first virtual machine bearing server and the switch is less than the second threshold within the preset duration, determining, by the switch, that the quantity of the virtual machines is less than the first threshold;
and wherein said detecting, by the switch, whether the port traffic between the first virtual machine bearing server and the switch is less than the second threshold within the preset duration comprises: detecting, by the switch, an average value of the port traffic and a peak value of the port traffic; when the average value is less than the second threshold and the peak value is less than a preset multiple of the second threshold within the preset duration, determining, by the switch, that the port traffic between the first virtual machine bearing server and the switch is less than the second threshold within the preset duration.

2. The method according to claim 1, **characterized in that** requesting, by the switch, the virtual machine management server to migrate the virtual machines connected with the first virtual machine bearing server to another virtual machine bearing server or other virtual machine bearing servers comprises:
requesting, by the switch, the virtual machine management server to migrate the virtual machines to another virtual machine bearing server or other virtual machine bearing servers through a message in a predefined format, wherein the message in the predefined format carries the average value of the port traffic and the peak value of the port traffic, a port number corresponding to the first virtual machine bearing server, and an active request identification used for identifying whether the first virtual machine bearing server is a request initiator.

3. The method according to claim 1, **characterized in that** after requesting, by the switch, the virtual machine management server to migrate the virtual machines connected with the first virtual machine bearing server to another virtual machine bearing server or other virtual machine bearing servers, the method further comprises:
sending, by the virtual machine management server, a traffic statistics query to one or more other ports other than a port corresponding to the first virtual machine bearing server;
detecting, by the virtual machine management server, whether to migrate the virtual machines to a second virtual machine bearing server corresponding to one port of the one or more other ports, according to traffic statistics of the one or more other ports.

4. The method according to claim 3, **characterized in that** detecting, by the virtual machine management server, whether to migrate the virtual machines to the second virtual machine bearing server corresponding to one port of the one or more other ports according to the traffic statistics of the one or more other ports comprises:
when a sum of an average value of the port traffic of the first virtual machine bearing server and an average value of the port traffic of the second virtual machine bearing server is not greater than a third threshold, and a sum of a peak value of the port traffic of the first virtual machine bearing server and a peak value of the port traffic of the second virtual machine bearing server is not greater than a total bandwidth of the second virtual machine bearing server, migrating, by the virtual machine management server, the virtual machines to the second virtual machine bearing server.

5. An apparatus for migrating virtual machines, wherein the apparatus is located in a switch side and comprises:
a detection component (22), configured to detect whether a quantity of the virtual machines connected with a first virtual machine bearing server is less than a first threshold;
a request component (24), configured to request a virtual machine management server to migrate the virtual machines connected with the first virtual machine bearing server to another virtual machine or other virtual machine bearing servers, when the quantity of the virtual machines is less than the first threshold;
wherein the detection component (22) comprises:
a first detection component (222), configured to judge whether the port traffic between the first virtual machine bearing server and the switch is less than a second threshold within a preset duration;
a determination component (224), configured to determine that the quantity of the virtual machines is less than the first threshold, when the detection result of the first detection component (222) is that the port traffic between the first virtual machine bearing server and the switch is less than the second threshold within the preset duration;
wherein the first detection component (222) comprises:
a detection unit (2222), configured to detect an average value of the port traffic and a peak value of the port traffic;
a determination unit (2224), configured to determine that the detection result is that the port traffic between the first virtual machine bearing server and the switch is less than the second threshold within the preset duration, when the average value is less than the second threshold and the peak value is less than a preset multiple of the second threshold within the preset duration.

6. The apparatus according to claim 5, **characterized in that** the request component (24) comprises:
a request unit (242), configured to request the virtual machine management server to migrate the virtual machines to another virtual machine bearing server or other virtual machine bearing servers through a message in a predefined format, wherein the message in the predefined format carries the average value and the peak value of the port traffic, a port number corresponding to the first virtual machine bearing server, and an active request identification used for identifying whether the first virtual machine bearing server is a request initiator.

7. A system for migrating virtual machines, comprising the apparatus for migrating virtual machines according to any one of claims 5 to 6, and a virtual machine management server, wherein the virtual machine management server comprises:
a query component (62), configured to send a traffic statistics query to one or more other ports other than a port corresponding to the first virtual machine bearing server;
a second detection component (64), configured to judge whether to migrate the virtual machines to a second virtual machine bearing server corresponding to one port of the one or more other ports, according to the traffic statistics of the one or more other ports.

8. The system according to claim 7, **characterized in that** the second detection component (64) comprises:
a migration component (642), configured to migrate the virtual machines to the second virtual machine bearing server, when a sum of an average value of the port traffic of the first virtual machine bearing server and an average value of the port traffic of the second virtual machine bearing server is not greater than a third threshold, and a sum of a peak value of the port traffic of the first virtual machine bearing server and a peak value of the port traffic of the second virtual machine bearing server is not greater than a total bandwidth of the second virtual machine bearing server.

## Patentansprüche

1. Verfahren zur Migration von virtuellen Maschinen, umfassend:
Erfassen (S102), durch einen Switch, ob eine Menge der virtuellen Maschinen, die mit einem ersten virtuelle Maschinen tragenden Server verbunden sind, weniger als einen ersten Schwellenwert beträgt;
wenn die Menge der virtuellen Maschinen weniger als den ersten Schwellenwert beträgt, Auffordern (S104) eines Verwaltungsservers für virtuelle Maschinen durch den Switch dazu, die virtuellen Maschinen, die mit dem ersten virtuelle Maschinen tragenden Server verbunden sind, zu einem anderen virtuelle Maschinen tragenden Server oder anderen virtuelle Maschinen tragenden Servern zu migrieren;
wobei das Erfassen, durch den Switch, ob die Menge der virtuellen Maschinen, die mit dem ersten virtuelle Maschinen tragenden Server verbunden sind, weniger als den ersten Schwellenwert beträgt, umfasst:
Erfassen, durch den Switch, ob Port-Traffic zwischen dem ersten virtuelle Maschinen tragenden Server und dem Switch innerhalb einer voreingestellten Dauer weniger als einen zweiten Schwellenwert beträgt;
wenn der Port-Traffic zwischen dem ersten virtuelle Maschinen tragenden Server und dem Switch innerhalb der voreingestellten Dauer weniger als den zweiten Schwellenwert beträgt, Bestimmen, durch den Switch, dass die Menge der virtuellen Maschinen weniger als den ersten Schwellenwert beträgt;
und wobei das Erfassen, durch den Switch, ob der Port-Traffic zwischen dem ersten virtuelle Maschinen tragenden Server und dem Switch innerhalb der voreingestellten Dauer weniger als den zweiten Schwellenwert beträgt, umfasst: Erfassen, durch den Switch, eines Durchschnittswerts des Port-Traffics und eines Spitzenwerts des Port-Traffics; wenn innerhalb der voreingestellten Dauer der Durchschnittswert weniger als den zweiten Schwellenwert beträgt und der Spitzenwert weniger als ein voreingestelltes Vielfaches des zweiten Schwellenwerts beträgt, Bestimmen, durch den Switch, dass der Port-Traffic zwischen dem ersten virtuelle Maschinen tragenden Server und dem Switch innerhalb der voreingestellten Dauer weniger als den zweiten Schwellenwert beträgt.

2. Verfahren nach Anspruch 1, **dadurch gekennzeichnet, dass** das Auffordern des Verwaltungsservers für virtuelle Maschinen durch den Switch dazu, die virtuellen Maschinen, die mit dem ersten virtuelle Maschinen tragenden Server verbunden sind, zu einem anderen virtuelle Maschinen tragenden Server oder anderen virtuelle Maschinen tragenden Servern zu migrieren, umfasst:
Auffordern des Verwaltungsservers für virtuelle Maschinen durch den Switch dazu, die virtuellen Maschinen zu einem anderen virtuelle Maschinen tragenden Server oder anderen virtuelle Maschinen tragenden Servern zu migrieren über eine Nachricht in einem vordefinierten Format, wobei die Nachricht im vordefinierten Format den Durchschnittswert des Port-Traffics und den Spitzenwert des Port-Traffics, eine Port-Nummer, die dem ersten virtuelle Maschinen tragenden Server entspricht, und eine aktive Anfragekennung übermittelt, die dafür verwendet wird zu identifizieren, ob der erste virtuelle Maschinen tragende Server ein Anfrage-Initiator ist.

3. Verfahren nach Anspruch 1, **dadurch gekennzeichnet, dass** nach dem Auffordern des Verwaltungsservers für virtuelle Maschinen durch den Switch dazu, die virtuellen Maschinen, die mit dem ersten virtuelle Maschinen tragenden Server verbunden sind, zu einem anderen virtuelle Maschinen tragenden Server oder anderen virtuelle Maschinen tragenden Servern zu migrieren, das Verfahren weiter umfasst:
Senden, durch den Verwaltungsserver für virtuelle Maschinen, einer Traffic-Statistikabfrage an einen oder mehrere andere Ports als einen Port, der dem ersten virtuelle Maschinen tragenden Server entspricht;
Erfassen, durch den Verwaltungsserver für virtuelle Maschinen, ob die virtuellen Maschinen gemäß Traffic-Statistik des einen oder mehrerer anderer Ports zu einem zweiten virtuelle Maschinen tragenden Server migriert werden sollen, der einem Port aus dem einen oder mehreren anderen Ports entspricht.

4. Verfahren nach Anspruch 3, **dadurch gekennzeichnet, dass** das Erfassen, durch den Verwaltungsserver für virtuelle Maschinen, ob die virtuellen Maschinen gemäß der Traffic-Statistik des einen oder mehrerer anderer Ports zu dem zweiten virtuelle Maschinen tragenden Server migriert werden sollen, der einem Port aus dem einen oder mehreren anderen Ports entspricht, umfasst:
wenn eine Summe aus einem Durchschnittswert des Port-Traffics des ersten virtuelle Maschinen tragenden Servers und einem Durchschnittswert des Port-Traffics des zweiten virtuelle Maschinen tragenden Servers nicht größer ist als ein dritter Schwellenwert, und eine Summe aus einem Spitzenwert des Port-Traffics des ersten virtuelle Maschinen tragenden Servers und einem Spitzenwert des Port-Traffics des zweiten virtuelle Maschinen tragenden Servers nicht größer ist als eine Gesamtbandbreite des zweiten virtuelle Maschinen tragenden Servers, Migrieren der virtuellen Maschinen durch den Verwaltungsserver für virtuelle Maschinen zum zweiten virtuelle Maschinen tragenden Server.

5. Vorrichtung zur Migration von virtuellen Maschinen, wobei die Vorrichtung in einer Switch-Seite angesiedelt ist und umfasst:
eine Erfassungskomponente (22), die dazu konfiguriert ist zu erfassen, ob eine Menge der virtuellen Maschinen, die mit einem ersten virtuelle Maschinen tragenden Server verbunden sind, kleiner ist als ein erster Schwellenwert;
eine Anfragekomponente (24), die dazu konfiguriert ist einen Verwaltungsserver für virtuelle Maschinen dazu aufzufordern, die virtuellen Maschinen, die mit dem ersten virtuelle Maschinen tragenden Server verbunden sind, zu einem anderen virtuellen Maschinen oder anderen virtuelle Maschinen tragenden Servern zu migrieren, wenn die Menge der virtuellen Maschinen weniger als den ersten Schwellenwert beträgt;
wobei die Erfassungskomponente (22) umfasst:
eine erste Erfassungskomponente (222), die dazu konfiguriert ist zu beurteilen, ob der Port-Traffic zwischen dem ersten virtuelle Maschinen tragenden Server und dem Switch innerhalb einer voreingestellten Dauer weniger als einen zweiten Schwellenwert beträgt;
eine Bestimmungskomponente (224), die dazu konfiguriert ist zu bestimmen, dass die Menge der virtuellen Maschinen weniger als den ersten Schwellenwert beträgt, wenn das Erfassungsergebnis der ersten Erfassungskomponente (222) lautet, dass der Port-Traffic zwischen dem ersten virtuelle Maschinen tragenden Server und dem Switch innerhalb der voreingestellten Dauer weniger als den zweiten Schwellenwert beträgt;
wobei die erste Erfassungskomponente (222) umfasst:
eine Erfassungseinheit (2222), die dazu konfiguriert ist, einen Durchschnittswert des Port-Traffics und einen Spitzenwert des Port-Traffics zu erfassen;
eine Bestimmungseinheit (2224), die dazu konfiguriert ist zu bestimmen, dass das Erfassungsergebnis lautet, dass der Port-Traffic zwischen dem ersten virtuelle Maschinen tragenden Server und dem Switch innerhalb der voreingestellten Dauer weniger als den zweiten Schwellenwert beträgt, wenn innerhalb der voreingestellten Dauer der Durchschnittswert weniger als den zweiten Schwellenwert beträgt, und der Spitzenwert weniger als ein voreingestelltes Vielfaches des zweiten Schwellenwerts beträgt.

6. Vorrichtung nach Anspruch 5, **dadurch gekennzeichnet, dass** die Anfragekomponente (24) umfasst:
eine Anfrageeinheit (242), die dazu konfiguriert ist den Verwaltungsserver für virtuelle Maschinen über eine Nachricht in einem vordefinierten Format dazu aufzufordern, die virtuellen Maschinen zu einem anderen virtuelle Maschinen tragenden Server oder anderen virtuelle Maschinen tragenden Servern zu migrieren, wobei die Nachricht im vordefinierten Format den Durchschnittswert und den Spitzenwert des Port-Traffics, eine Port-Nummer, die dem ersten virtuelle Maschinen tragenden Server entspricht, und eine aktive Anfragekennung übermittelt, die dafür verwendet wird zu identifizieren, ob der erste virtuelle Maschinen tragende Server ein Anfrage-Initiator ist.

7. System zur Migration von virtuellen Maschinen, das die Vorrichtung zur Migration von virtuellen Maschinen nach einem der Ansprüche 5 bis 6, und einen Verwaltungsserver für virtuelle Maschinen umfasst, wobei der Verwaltungsserver für virtuelle Maschinen umfasst:
eine Abfragekomponente (62), die dazu konfiguriert ist, eine Traffic-Statistikabfrage an einen oder mehrere andere Ports als einen Port zu senden, der dem ersten virtuelle Maschinen tragenden Server entspricht;
eine zweite Erfassungskomponente (64), die dazu konfiguriert ist zu beurteilen, ob die virtuellen Maschinen gemäß der Traffic-Statistik des einen oder mehrerer anderer Ports zu einem zweiten virtuelle Maschinen tragenden Server migriert werden sollen, der einem Port aus dem einen oder mehreren anderen Ports entspricht.

8. System nach Anspruch 7, **dadurch gekennzeichnet, dass** die zweite Erfassungskomponente (64) umfasst:
eine Migrationskomponente (642), die dazu konfiguriert ist, die virtuellen Maschinen zum zweiten virtuelle Maschinen tragenden Server zu migrieren, wenn eine Summe aus einem Durchschnittswert des Port-Traffics des ersten virtuelle Maschinen tragenden Servers und einem Durchschnittswert des Port-Traffics des zweiten virtuelle Maschinen tragenden Servers nicht größer ist als ein dritter Schwellenwert, und eine Summe aus einem Spitzenwert des Port-Traffics des ersten virtuelle Maschinen tragenden Servers und einem Spitzenwert des Port-Traffics des zweiten virtuelle Maschinen tragenden Servers nicht größer ist als eine Gesamtbandbreite des zweiten virtuelle Maschinen tragenden Servers.

## Revendications

1. Procédé de migration de machines virtuelles comprenant :
le fait de détecter (S102), par un commutateur, si une quantité des machines virtuelles connectées à un premier serveur de support de machines virtuelles est inférieure à un premier seuil ;
quand la quantité des machines virtuelles est inférieure au premier seuil, la demande (S104), par le commutateur, à un serveur de gestion de machines virtuelles de migrer les machines virtuelles connectées au premier serveur de support de machines virtuelles à un autre serveur de support de machines virtuelles ou d'autres serveurs de support de machines virtuelles ;
dans lequel ledit fait de détecter, par le commutateur, si la quantité des machines virtuelles connectées au premier serveur de support de machines virtuelles est inférieure au premier seuil comprend :
le fait de détecter, par le commutateur, si un trafic de port entre le premier serveur de support de machines virtuelles et le commutateur est inférieur à un deuxième seuil dans une durée prédéfinie ;
quand le trafic de port entre le premier serveur de support de machines virtuelles et le commutateur est inférieur au deuxième seuil dans la durée prédéfinie, la détermination, par le commutateur, que la quantité des machines virtuelles est inférieure au premier seuil ;
et dans lequel ledit fait de détecter, par le commutateur, si le trafic de port entre le premier serveur de support de machines virtuelles et le commutateur est inférieur au deuxième seuil dans la durée prédéfinie comprend : la détection, par le commutateur, d'une valeur moyenne du trafic de port et d'une valeur de crête du trafic de port ; quand la valeur moyenne est inférieure au deuxième seuil et la valeur de crête est inférieure à un multiple prédéfini du deuxième seuil dans la durée prédéfinie, la détermination, par le commutateur, que le trafic de port entre le premier serveur de support de machines virtuelles et le commutateur est inférieur au deuxième seuil dans la durée prédéfinie.

2. Procédé selon la revendication 1, **caractérisé en ce que** la demande, par le commutateur, au serveur de gestion de machines virtuelles de migrer les machines virtuelles connectées au premier serveur de support de machines virtuelles à un autre serveur de support de machines virtuelles ou d'autres serveurs de support de machines virtuelles comprend :
la demande, par le commutateur, au serveur de gestion de machines virtuelles de migrer les machines virtuelles à un autre serveur de support de machines virtuelles ou d'autres serveurs de support de machines virtuelles par le biais d'un message dans un format prédéfini, dans lequel le message dans le format prédéfini transporte la valeur moyenne du trafic de port et la valeur de crête du trafic de port, un numéro de port correspondant au premier serveur de support de machines virtuelles et une identification de demande active utilisée pour identifier si le premier serveur de support de machines virtuelles est un initiateur de demande.

3. Procédé selon la revendication 1, **caractérisé en ce que**, après la demande, par le commutateur, au serveur de gestion de machines virtuelles de migrer les machines virtuelles connectées au premier serveur de support de machines virtuelles à un autre serveur de support de machines virtuelles ou d'autres serveurs de support de machines virtuelles, le procédé comprend en outre :
l'envoi, par le serveur de gestion de machines virtuelles, d'une interrogation de statistique de trafic à un ou plusieurs autres ports différents d'un port correspondant au premier serveur de support de machines virtuelles ;
la détection, par le serveur de gestion de machines virtuelles, du fait de migrer les machines virtuelles à un deuxième serveur de support de machines virtuelles correspondant à un port des un ou plusieurs autres ports, en fonction d'une statistique de trafic des un ou plusieurs autres ports.

4. Procédé selon la revendication 3, **caractérisé en ce que** la détection, par le serveur de gestion de machines virtuelles, du fait de migrer les machines virtuelles au deuxième serveur de support de machines virtuelles correspondant à un port des un ou plusieurs autres ports, en fonction d'une statistique de trafic des un ou plusieurs autres ports comprend :
quand une somme d'une valeur moyenne du trafic de port du premier serveur de support de machines virtuelles et d'une valeur moyenne du trafic de port du deuxième serveur de support de machines virtuelles n'est pas supérieure à un troisième seuil, et une somme d'une valeur de crête du trafic de port du premier serveur de support de machines virtuelles et d'une valeur de crête du trafic de port du deuxième serveur de support de machines virtuelles n'est pas supérieure à une largeur de bande totale du deuxième serveur de support de machines virtuelles, la migration, par le serveur de gestion de machines virtuelles, des machines virtuelles au deuxième serveur de support de machines virtuelles.

5. Dispositif de migration de machines virtuelles, dans lequel le dispositif est situé d'un côté commutateur et comprend :
un composant de détection (22) configuré pour détecter si une quantité des machines virtuelles connectées à un premier serveur de support de machines virtuelles est inférieure à un premier seuil ;
un composant de demande (24) configuré pour demander à un serveur de gestion de machines virtuelles de migrer les machines virtuelles connectées au premier serveur de support de machines virtuelles à une autre machine virtuelle ou d'autres serveurs de support de machines virtuelles, quand la quantité des machines virtuelles est inférieure au premier seuil ;
dans lequel le composant de détection (22) comprend :
un premier composant de détection (222) configuré pour juger si le trafic de port entre le premier serveur de support de machines virtuelles et le commutateur est inférieur à un deuxième seuil dans une durée prédéfinie ;
un composant de détermination (224) configuré pour déterminer que la quantité des machines virtuelles est inférieure au premier seuil quand le résultat de détection du premier composant de détection (222) est que le trafic de port entre le premier serveur de support de machines virtuelles et le commutateur est inférieur au deuxième seuil dans la durée prédéfinie ;
dans lequel le premier composant de détection (222) comprend :
une unité de détection (2222) configurée pour détecter une valeur moyenne du trafic de port et une valeur de crête du trafic de port ;
une unité de détermination (2224) configurée pour déterminer que le résultat de détection est que le trafic de port entre le premier serveur de support de machines virtuelles et le commutateur est inférieur au deuxième seuil dans la durée prédéfinie quand la valeur moyenne est inférieure au deuxième seuil et la valeur de crête est inférieure à un multiple prédéfini du deuxième seuil dans la durée prédéfinie.

6. Dispositif selon la revendication 5, **caractérisé en ce que** le composant de demande (24) comprend :
une unité de demande (242) configurée pour demander au serveur de gestion de machines virtuelles de migrer les machines virtuelles à un autre serveur de support de machines virtuelles ou d'autres serveurs de support de machines virtuelles par le biais d'un message dans un format prédéfini, dans lequel le message dans le format prédéfini transporte la valeur moyenne et la valeur de crête du trafic de port, un numéro de port correspondant au premier serveur de support de machines virtuelles et une identification de demande active utilisée pour identifier si le premier serveur de support de machines virtuelles est un initiateur de demande.

7. Système de migration de machines virtuelles comprenant le dispositif de migration de machines virtuelles selon l'une quelconque des revendications 5 à 6, et un serveur de gestion de machines virtuelles, dans lequel le serveur de gestion de machines virtuelles comprend :
un composant d'interrogation (62) configuré pour envoyer une interrogation de statistique de trafic à un ou plusieurs autres ports différents d'un port correspondant au premier serveur de support de machines virtuelles ;
un deuxième composant de détection (64) configuré pour juger le fait de migrer les machines virtuelles à un deuxième serveur de support de machines virtuelles correspondant à un port des un ou plusieurs autres ports, en fonction d'une statistique de trafic des un ou plusieurs autres ports.

8. Système selon la revendication 7, **caractérisé en ce que** le deuxième composant de détection (64) comprend :
un composant de migration (642) configuré pour migrer les machines virtuelles au deuxième serveur de support de machines virtuelles quand une somme d'une valeur moyenne du trafic de port du premier serveur de support de machines virtuelles et d'une valeur moyenne du trafic de port du deuxième serveur de support de machines virtuelles n'est pas supérieure à un troisième seuil, et une somme d'une valeur de crête du trafic de port du premier serveur de support de machines virtuelles et d'une valeur de crête du trafic de port du deuxième serveur de support de machines virtuelles n'est pas supérieure à une largeur de bande totale du deuxième serveur de support de machines virtuelles.
